# EUROPEAN PATENT APPLICATION

(11) **EP 2 907 670 A2**
(43) Date of publication of application: **19.08.2015**
(21) Application number: 13844819.6
(22) Date of filing: 10.10.2013
(51) Int. Cl.: B41M 5/00, B41J 2/01, B41M 5/50, B41M 5/52, C09D 11/00

(54) **AQUEOUS INKJET ACCEPTOR SOLUTION, INK SET INCLUDING ACCEPTOR SOLUTION, AND INKJET RECORDING METHOD USING INK SET**

(30) Priority: 11.10.2012 JP 2012226259
(71) Applicant: DNP Fine Chemicals Co., Ltd., Yokohama-shi, Kanagawa 226-0022 (JP)
(72) Inventor: INUMARU, Masaki, Yokohama-shi Kanagawa 226-0022 (JP); MATSUMOTO, Kisei, Yokohama-shi Kanagawa 226-0022 (JP); SHIRAISHI, Naoki, Yokohama-shi Kanagawa 226-0022 (JP); YAMAZAKI, Fumie, Yokohama-shi Kanagawa 226-0022 (JP); SUGITA, Yukio, Yokohama-shi Kanagawa 226-0022 (JP)
(74) Representative: KATZAROV S.A.
(86) International application number: PCT/JP2013/077646
(87) International publication number: WO 2014/058029

(57) **Abstract**

Provided are an aqueous inkjet acceptor solution having properties required for aqueous inkjet recording methods, particularly preventing nozzle clogging and having increased storage stability, and an ink set including the acceptor solution. The acceptor solution according to the present invention comprises (A) an organic acid salt having a carbon number of at least 3, (B) an inorganic salt and/or an organic acid salt having a carbon number of 2 or less, (C) a high boiling-point aqueous organic solvent having a boiling point of at least 180°C, and (D) water, wherein component (A) and/or component (B) is a polyvalent metal salt. Component (A) is not particularly restricted but is preferably a carboxylate, and could be a pantothenic acid, propionic acid or lactic acid calcium salt, a magnesium salt, a nickel salt, an aluminium salt, a boron salt or a zinc salt. Component (B) is not also not restricted but is preferably a chloride, a sulphate, a nitrate, a formate or an acetate, or a mixed salt of the same. Component (C) is a polyvalent alcohol, in particular is preferably an alkanediol in which both ends are not simultaneously a hydroxyl group.

## Description

### TECHNICAL FIELD

The present invention relates to an aqueous inkjet acceptor solution, an ink set including this acceptor solution, and an inkjet recording method using this ink set.

### BACKGROUND ART

The inkjet recording system is a recording system that directly sprays ink droplets from very fine nozzles to a recording medium such as paper to cause to adhere, thereby obtaining text and/or images. For this recording system, miniaturization, speed increase, noise reduction, power savings and colorizing are easy, and even more, non-contact printing to the recording media is possible; therefore, the application scope is not only home use, but is expanding to office use and commercial printing use.

As inks used in inkjet recording, water-based dye inks produced by dissolving various water-soluble dyes in water, or in a liquid mixture of water and organic solvent, are widely being used. However, when ejecting water-based dye inks onto the paper that is being used widely generally, such as plain paper and recycled paper, the ink is absorbed into the paper fibers, and spreads around the point of impact, whereby blurring that is called feathering can occur. In order to solve this problem, inkjet exclusive paper has been proposed on which an acceptor layer to absorb and accept the water-based dye ink is formed at the surface of the recording medium (e.g., refer to Patent Documents 1 to 3). However, the cost of the printed matter itself must be curbed in office use and commercial printing use, and as recording media, uncoated paper such as low-cost copy paper on which no special treatment so as to raise the printing adaptability is carried out is usually being used.

Therefore, focusing on the matter of dyes being anionic, it has been proposed to spray an acceptor solution containing polyvalent metal salts onto the recording medium before spraying the water-based dye ink onto the recording medium, and subsequently spraying the water-based dye ink onto the acceptor solution (e.g., refer to Patent Documents 4 to 6). In addition, in recent years, not only water-based dye inks, but also water-based pigment inks are widely being used in the point of suppressing feathering compared to water-based dye inks; however, it has been known that it is possible to fix water-based pigment inks using the above-mentioned acceptor solution (e.g., refer to Patent Document 7).

Above all, it has been proposed to fix, onto the surface to be printed using at least an inkjet ink or the whole surface of the recording medium, an acceptor solution produced by dissolving one type or two or more types of metal salts having a solubility in water of at least 0.1 mol/liter selected from divalent or higher valence calcium salts, magnesium salts, nickel salts and zinc salts into an aqueous solvent, and then print onto the metal ion fixed part, using an inkjet ink consisting of an aqueous solvent containing at least pigment, resin emulsion and surfactant, in which a phosphorus-containing group having at least one P-O or P=O bond is bonded to the pigment surface (e.g., refer to Patent Document 8). According to the invention disclosed in Patent Document 8, a vivid image is obtained by remarkably suppressing feathering and bleeding. In addition, Patent Document 8 discloses being able to fix the acceptor solution by the inkjet system, by establishing a high-boiling-point organic solvent such as ethylene glycol, diethylene glycol, triethylene glycol, polyethylene glycol and polypropylene glycol triethanolamine as the solvent of the acceptor solution.

In addition, in the inkjet recording system that emits colorless ink and colored ink containing pigment onto a recording medium, in which a viscosity rise of the ink arising by clumping or mixing of pigment occurs by the colorless ink and the colored ink mixing, it has been proposed that the viscosity rise when the water evaporates is lowered, and thus the viscosity rise accompanying the evaporation of water can be curbed by jointly using 1,2-butanediol, 1,2-pentanediol or 1,2-hexanediol in addition to water as the colorless ink, whereby the decap characteristic becomes more favorable (e.g., refer to Patent Document 9).
Patent Document 1: Japanese Unexamined Patent Application, Publication No. S57-069054
Patent Document 2: Japanese Unexamined Patent Application, Publication No. H06-143797
Patent Document 3: Japanese Unexamined Patent Application, Publication No. 2009-178912
Patent Document 4: Japanese Unexamined Patent Application, Publication No. S63-299970
Patent Document 5: Japanese Unexamined Patent Application, Publication No. H05-202328
Patent Document 6: Japanese Unexamined Patent Application, Publication No. 2001-162920
Patent Document 7: Japanese Unexamined Patent Application, Publication No. H11-034478
Patent Document 8: Japanese Unexamined Patent Application, Publication No. 2012-051357
Patent Document 9: Japanese Unexamined Patent Application, Publication No. 2010-046810

### DISCLOSURE OF THE INVENTION

### Problems to be Solved by the Invention

However, in the vicinity of the fine nozzles of the inkjet head, since the ink composition adhered to the nozzle outlet and the ink composition inside the nozzle tend to dry, with the inventions described in Patent Documents 4 to 9, the polyvalent metal salts that had been contained in the reaction liquid (acceptor solution) precipitate, whereby nozzle clogging in the inkjet head or blockage of the flow path of the reaction liquid in the inkjet recording device can occur. For this reason, with the inventions described in Patent Documents 4 to 9, there is room for further improvement in regards to nozzle clogging. In addition, generally it is said that the acceptor solution degrades along with the passage of time, and thus it has been demanded to raise the storage stability and curb the degradation of the acceptor solution.

The present invention has been made taking account of the above-mentioned situation, and the object thereof is to provide an aqueous inkjet acceptor solution having the characteristics required in the aqueous inkjet recording system, especially being able to prevent nozzle clogging and raising storage stability, and an ink set including this acceptor solution.

### Means for Solving the Problems

The present inventors conducted thorough research in order to solve the above-mentioned problem, and found that by setting the composition of metal salts included in an acceptor solution to a specific composition, it could contribute not only to the prevention of feathering, but also the prevention of nozzle clogging and an improvement in storage stability, thereby arriving at completing the present invention. In other words, although the matter of considering the composition of the metal salts contained in the acceptor solution in order to raise the feathering prevention effect as disclosed in Patent Documents 8, etc., and the matter of considering the type of solvent in order to prevent nozzle clogging as disclosed in Patent Documents 8, 9, etc. had been carried out in the past, the present inventors were first to find that, by establishing the metal salts contained in the acceptor solution in a specific composition, it could contribute not only to the prevention of feathering, but also to nozzle clogging prevention and an improvement in storage stability. More specifically, the present invention provides the following such matters.

A first aspect of the present invention is an aqueous inkjet acceptor solution including: (A) an organic salt having a carbon number of at least 3; (B) an inorganic salt and/or organic salt having a carbon number of no more than 2; (C) a high-boiling-point water-soluble organic solvent with a boiling point of at least 180ºC; and (D) water, in which at least one of the component (A) and the component (B) is a polyvalent metal salt. It should be note that, hereinafter, "(A) an organic salt having a carbon number of at least 3" is also referred to as "component (A)", "(B) an inorganic salt and/or organic salt having a carbon number of no more than 2" is also referred to as "component (B)", "(C) a high-boiling-point water-soluble organic solvent with a boiling point of at least 180ºC" is also referred to as "component (C)", and "(D) water" is also referred to as "component (D)".

In addition, according to a second aspect of the present invention, in the aqueous inkjet acceptor solution as described in the first aspect, the polyvalent metal salt is selected from a calcium salt, a magnesium salt, a nickel salt, an aluminum salt, a boron salt, a zinc salt or a mixture thereof.

Moreover, according to a third aspect of the present invention, in the aqueous inkjet acceptor solution as described in the first or second aspect, the component (A) is a carboxylate.

Furthermore, according to a fourth aspect of the present invention, in the aqueous inkjet acceptor solution as described in the third aspect, the component (A) is selected from a pantothenate, a propionate, a lactate or a mixture thereof.

Additionally, according to a fifth aspect of the present invention, in the aqueous inkjet acceptor solution as described in any one of the first to fourth aspects, the component (B) is selected from a chloride, a sulfate, a nitrate, a formate, an acetate or a mixture thereof.

Moreover, according to a sixth aspect of the present invention, in the aqueous inkjet acceptor solution as described in any one of the first to fifth aspects, the component (C) is a polyalcohol.

Furthermore, according to a seventh aspect of the present invention, in the aqueous inkjet acceptor solution as described in the sixth aspect, the polyalcohol is an alkanediol in which both ends are not hydroxyl groups simultaneously.

In addition, an eighth aspect of the present invention is an aqueous inkjet ink set including: the aqueous inkjet acceptor solution as described in any one of the first to seventh aspects; and a water-based ink containing coloring material.

Moreover, a ninth aspect of the present invention is a method of recording by an inkjet system on a recording medium using the aqueous inkjet ink set as described in the eighth aspect, including: spraying the inkjet acceptor solution by the inkjet system onto a surface of the recording medium; and subsequently spraying the water-based ink by the inkjet system.

### Effects of the Invention

According to the present invention, it is possible to provide an aqueous inkjet acceptor solution having the characteristics required in the aqueous inkjet recording system, especially being able to prevent nozzle clogging and raising storage stability, and an ink set including this acceptor solution.

### PREFERRED MODE FOR CARRYING OUT THE INVENTION

Hereinafter, specific embodiments of the present invention will be explained in detail; however, the present invention is in no way limited to the following embodiments, and can be implemented by adding appropriate modifications within the scope of the object of the present invention.

### Aqueous Inkjet Acceptor Solution

The aqueous inkjet acceptor solution of the present invention (hereinafter also referred to simply as "acceptor solution") at least contains (A) an organic salt having a carbon number of at least 3, (B) an inorganic salt and/or organic salt having a carbon number of no more than 2, (C) a high-boiling-point water-soluble organic solvent with a boiling point of at least 180ºC, and (D) water, in which at least one of the above component (A) and the above component (B) is a polyvalent metal salt.

### ((A) Organic salt having carbon number of at least 3)

The acceptor solution of the present invention contains not only component (B), but also (A) the organic salt having a carbon number of at least 3. In a case of not containing component (A), and containing only component (B), although component (B) has high solubility in water, which is component (D), there is almost no solubility in the high-boiling-point water-soluble organic solvent that is component (C). However, in the case of spraying the acceptor solution by the inkjet system, the viscosity of the acceptor solution must be made a viscosity suited to spraying, and for this reason, not only water, but also the high-boiling-point water-soluble organic solvent must be used as the solvent. For this reason, if abundantly adding component (B) in order to effectively prevent bleeding and feathering, there is a possibility of component (B) separating accompanying evaporation of component (D). With the present invention, since not only component (B), but also component (A) is used, it is possible to add a sufficient amount of salt to the solvent, a result of which, in the ink set consisting of an acceptor solution and aqueous inks, even if applying both this acceptor solution and aqueous inks to an inkjet system, it is possible to effectively prevent bleeding and feathering.

It should be noted that, in the present specification, bleeding refers to a state in which colors mix in the border region between different adjacent colors to become blurred, and feathering refers to a state in which a printed part spreads on uncoated paper mainly in the shape of whiskers.

In addition, in the vicinity of the fine nozzles of the inkjet head, by part of the water contained in the acceptor solution evaporating, deposits of the metal salt is likely to form; however, with the acceptor solution of the present invention, even in the case of part of the water contained in the acceptor solution evaporating, the high-boiling-point water-soluble organic solvent that is component (C) will not evaporate. Then, with the present invention, by jointly using the above-mentioned component (A) and component (B), compared to an acceptor solution containing only component (B) in an amount able to effectively prevent bleeding and feathering without containing component (A), component (B) contained in the acceptor solution can be prevented from precipitating so as to maintain a state with favorable spray properties, even in a case of the acceptor solution being left open and a part of the water contained in the acceptor solution evaporating. In addition, with an acceptor solution containing only component (A) in abundance in order to effectively prevent bleeding and feathering, there is concern over the degradation of the spray properties due to the viscosity of the acceptor solution becoming too high and the viscosity of the fine droplets rising in the vicinity of the nozzle, and nozzle clogging in the inkjet head or blockage of the flow path of the acceptor solution in the inkjet recording device due to the storage stability deteriorating by excessive component (A) precipitating while storing for a long time occurring. With the present invention, by containing component (A) and component (B), it is possible to prevent such flaws.

The acid constituting component (A) is an organic acid having a carbon number of at least 3, and is preferably carboxylic acid. When it is a carboxylic acid having a carbon number of at least 3, it is preferable because dissolving component (A) in the high-boiling-point water-soluble organic solvent that is component (C) becomes easier, and it becomes difficult for the salt to precipitate when component (D) evaporates.

The organic acid constituting component (A) is not particularly limited so long as being an organic acid having a carbon number of at least 3; however, it is preferable for the solubility in water at 20ºC of the organic salt to be at least 0.1 mol/liter, and the solubility in 1,2-propanediol (propylene glycol) at 20ºC to be at least 0.01 mol/liter, and for example, pantothenic acid, propionic acid, lactic acid, malic acid, o-benzoic sulfimide (saccharin), ascorbic acid, etc. can be exemplified. As examples of further preferred organic acids, pantothenic acid, propionic acid and lactic acid can be exemplified from the points of the solubility and stability being favorable, and being able to efficiently prevent bleeding and feathering. Table 1 shows the solubilities in water and 1,2-propanediol at 20ºC of calcium pantothenate, calcium propionate and calcium lactate as examples of calcium salts of these acids. The salts of these organic acids all have solubilities in water at 20ºC of at least 0.1 mol/liter, and solubilities in 1,2-propanediol at 20ºC of at least 0.01 mol/liter.

**[Table 1]**

| | Solubility in water at 20°c (mol/L) | Solubility in 1,2-propanediol at 20°c (mol/L) |
|---|---|---|
| Calcium pantothenate | 0.76 | At least 0.01 |
| Calcium propionate | 1.40 | At least 0.01 |
| Calcium lactate | 0.22 | At least 0.01 |

Especially, establishing a salt of pantothenic acid or propionic acid as component (A) is preferable in the point of being able to effectively suppress bleeding and feathering. It should be noted that component (A) may be one type, or may be two or more types.

The concentration of component (A) can be appropriately decided so as to be an appropriate concentration range according to the reactivity with the coloring material contained in the aqueous ink, print quality, coating method, etc.; however, it is preferably on the order of 0.01 to 0.5 mol/liter, and more preferably 0.05 to 0.2 mol/liter. It should be noted that the units: mol/liter refer to the mole number of component (A) relative to 1 liter of acceptor solution. If the concentration of component (A) is less than 0.01 mol/liter, it is not preferable due to not being possible to effectively suppress bleeding and feathering. If the concentration of component (A) exceeds 0.5 mol/liter, it is not preferable because it will not be possible to sufficiently dissolve component (A) into component (C) and component (D), and degradation of the spray property due to the salt that had been contained in the acceptor solution precipitating, the viscosity of the acceptor solution becoming too high and the viscosity of the fine droplets rising in the vicinity of the nozzle, and nozzle clogging in the inkjet head or blockage of the flow path of the acceptor solution in the inkjet recording device due to the storage stability deteriorating by excessive component (A) precipitating while storing for a long time can occur.

### ((B) Inorganic salt and/or organic salt having carbon number of no more than 2)

The acceptor solution of the present invention contains not only component (A), but also (B) an inorganic salt and/or organic salt having a carbon number of no more than 2. As shown in Table 2, the solubility in water of component (B) is high compared to the solubility in water of component (A) (refer to Table 1); therefore, compared to an acceptor solution containing only component (A) in an amount able to effectively prevent feathering, it is possible to prevent the salt contained in the acceptor solution from precipitating even in a case of storing the acceptor solution over a long time period. In other words, the acceptor solution of the present invention contains not only component (A), but also component (B); therefore, it is possible to raise the storage stability of the acceptor solution.

**[Table 2]**

| | Solubility in water at 20°c (mol/L) |
|---|---|
| Calcium acetate | 2.53 |
| Calcium nitrate | 7.38 |
| Magnesium acetate | 3.75 |
| Magnesium sulfate | 2.12 |
| Calcium chloride | 6.72 |
| Magnesium chloride | 5.70 |

As the inorganic acid constituting component (B), although hydrochloric acid, hydrobromic acid, nitric acid, sulfuric acid, etc. can be exemplified, it is not limited to these. Thereamong, chlorides, nitrates or sulfates are preferable in the point of having high solubility in water, and chlorides or nitrates are more preferable.

As the organic acid constituting component (B), carboxylic acids having a carbon number of no more than 2, specifically formic acid and acetic acid, can be exemplified. Component (B) has high solubility in water, but very low solubility in polyalcohols, and the solubility in 1,2-propanediol is less than 0.01 mol/liter.

The concentration of component (B) can be appropriately decided so as to be an appropriate concentration range according to the reactivity with coloring material contained in the aqueous ink, print quality, coating method, etc.; however, it is preferably on the order of 0.005 to 2.0 mol/liter, and more preferably 0.01 to 1.0 mol/liter. It should be noted that the units: mol/liter refer to the mole number of component (B) relative to 1 liter of acceptor solution. If the concentration of component (B) is less than 0.005 mol/liter, it is not preferable because it will not be possible to effectively suppress bleeding and feathering. If the concentration of component (B) exceeds 2.0 mol/liter, it is not preferable because there is a possibility of the salt contained in the acceptor solution precipitating in the case of leaving the acceptor salt open.

Component (A) and component (B) are composed of monovalent or polyvalent metal ions and anions. As monovalent metal ions, lithium ion, sodium ion, potassium ion, etc. can be exemplified. As the polyvalent metal ion, calcium ion, magnesium ion, aluminum ion, titanium ion, iron(II) ion, iron(III) ion, cobalt ion, nickel ion, copper ion, zinc ion, barium ion, strontium ion, etc. can be exemplified. By at least one among component (A) and component (B) not being a monovalent metal ion, and being a polyvalent metal ion, a high image improvement effect is obtained. Furthermore, by a polyvalent metal ion being contained in both component (A) and component (B), a higher image improvement effect is obtained.

Especially in the point of having high solubility in water, the polyvalent metal ion is preferably a calcium salt, a magnesium salt, a nickel salt, a zinc salt, an aluminum salt or a boron salt, and is more preferably one type or two or more types selected from a calcium salt, a magnesium salt, a nickel salt or a zinc salt. If the solubility in water is low, the reactivity of the metal ion with the coloring material contained in the water-based ink will be insufficient, and there will be a possibility of not being able to effectively prevent feathering and bleeding.

The molar ratio A/B of component (A) to component (B) is preferably at least 0.05 to no more than 10, more preferably at least 0.05 to no more than 5.0, and even more preferably at least 0.05 to no more than 3.0. If A/B is less than 0.05, since the amount of (B) will be too great, in the case of leaving open the acceptor solution, the salt contained n the acceptor solution will precipitate from the water that is component (D), and there is a possibility of nozzle clogging occurring, and thus is not preferable. If A/B exceeds 10, since the amount of component (A) will be too great, it is not preferable because degradation of the spray property due to the salt that had been contained in the acceptor solution precipitating, the viscosity of the acceptor solution becoming too high and the viscosity of the fine droplets rising in the vicinity of the nozzle, and nozzle clogging in the inkjet head or blockage of the flow path of the acceptor solution in the inkjet recording device due to the storage stability deteriorating by the excessive component (A) precipitating while storing for a long time can occur. By the molar ratio A/B of component (A) to component (B) being the above-mentioned range, it is possible to effectively suppress feathering and bleeding, and thus clogging of the nozzle and precipitation of salt can be suppressed.

### ((C) High-boiling-point water-soluble organic solvent with boiling point of at least 180ºC)

The acceptor solution of the present invention contains (C) the high-boiling-point water-soluble organic solvent with a boiling point of at least 180ºC. By containing component (C), it is possible to curb the viscosity rise accompanying the evaporation of water, and thus it is possible to prevent clogging from occurring due to the acceptor solution drying at the nozzle, and thickening or solidifying.

The high-boiling-point water-soluble organic solvent is preferably a polyalcohol, more preferably is a polyalcohol having a carbon number of 2 to 8, and even more preferably is a polyalcohol having a carbon number of 3 to 6. As examples of the polyalcohol, 1,2-ethanediol (ethylene glycol, boiling point: 197.3ºC), 2,2'-oxydiethanol (diethylene glycol, boiling point 244.3ºC), 1,2-propanediol (propylene glycol, boiling point: 188.2ºC), 1,3-propanediol (trimethylene glycol, boiling point: 210 to 212ºC), 1,2,3-propanetriol (glycerin or glycerol, boiling point: 290ºC), 1,2-buntanediol (boiling point: 191ºC), 1,2-pentanediol (boiling point: 206ºC), 1,3-butanediol (boiling point: 207.5ºC), 1,2-hexanediol (boiling point: 223 to 224ºC), dipropylene glycol (boiling point: 232ºC), triethylene glycol (boiling point: 285ºC), tripropylene glycol (boiling point: 268ºC), tetraethylene glycol (boiling point: 314ºC), 1,4-butanediol (boiling point: 230ºC), 1,5-pentanediol (boiling point: 242ºC), 1,6-hexanediol (boiling point: 250ºC), 2-methyl-2,4-pentanediol (boiling point: 197.5ºC), 3-methyl-1,3-butanediol (boiling point: 202.5ºC), 3-methyl-1,5-pentanediol (boiling point: 250ºC), and additionally, oxyethylenes or oxypropylene copolymers of polyethylene glycol, polypropylene glycol, etc.; triols such as trimethylolethane, trimethylolpropane and 1,2,6-hexanetriol; tetrahydric alcohols such as erythritol, pentaerythritol and meso-erythritol; pentitols such as xylitol; hexitols such as sorbitol and mannitol; etc. can be exemplified. As examples of the polyalcohol having a carbon number of 2 to 8, 1,2-ethanediol (ethylene glycol), 2,2'-oxydiethanol (diethylene glycol), 1,2-propanediol (propylene glycol), 1,3-propanediol (trimethylene glycol), 1,2,3-propanetriol (glycerin or glycerol), 1,2-buntanediol, 1,2-pentanediol, 1,3-butanediol, 1,2-hexanediol, dipropylene glycol, triethylene glycol, tripropylene glycol, tetraethylene glycol, 1,4-butanediol, 1,5-pentanediol, 1,6-hexanediol, 2-methyl-2,4-pentanediol, 3-methyl-1,3-butanediol, 3-methyl-1,5-pentanediol, trimethylolethane, trimethylolpropane, 1,2,6-hexanetriol, erythritol, pentaerythritol, meso-erythritol, xylitol, sorbitol and mannitol, etc. can be exemplified. As examples of polyalcohols having a carbon number of 3 to 6, 2,2'-oxydiethanol (diethylene glycol), 1,2-propanediol (propylene glycol), 1,3-propanediol (trimethylene glycol), 1,2,3-propanetriol (glycerin or glycerol), 1,2-buntanediol, 1,2-pentanediol, 1,3-butanediol, 1,2-hexanediol, dipropylene glycol, triethylene glycol, tripropylene glycol, 1,4-butanediol, 1,5-pentanediol, 1,6-hexanediol, 2-methyl-2,4-pentanediol, 3-methyl-1,3-butanediol, 3-methyl-1,5-pentanediol, trimethylolethane, trimethylolpropane, 1,2,6-hexanetriol, erythritol, pentaerythritol, meso-erythritol, xylitol, sorbitol and mannitol, etc. can be exemplified.

As high-boiling-point water-soluble organic solvents other than the above-mentioned polyalcohols, monoalkyl ethers such as diethylene glycol monomethyl (or ethyl, isopropyl, n-butyl, isobutyl, n-hexyl or 2-ethylhexy) ether, triethylene glycol monomethyl (or ethyl, ispropyl, n-butyl or isobutyl) ether and dipropylene glycol monomethyl (or ethyl, isopropyl, n-butyl or isobutyl) ether; dialkyl ethers of polyalcohols such diethylene glycol diethyl ether, triethylene glycol dimethyl ether, triethylene glycol diethyl ether, tetraethylene glycol dimethyl ether and tetraethylene glycol diethyl ether; alkanolamines such diethanolamine, triethanolamine, N-methylethanolamine, N-ethylethanolamine, N-butylethanolamine, N-methyldiethanolamine, N-ethyldiethanolamine and N-butyldiethanolamine; nitrogen-containing heterocyclic compounds such as N-methyl-2-pyrrolidone, 2-pyrrolidone and 1,3-dimethyl-2-imidazolidinone; cyclic compounds such as γ-butyrolactone and sulfolane; etc. can be exemplified.

Thereamong, it is particularly preferable to contain an alkanediol in which both ends are not hydroxyl groups simultaneously in a part of component (C). An alkanediol in which both ends are not hydroxyl groups simultaneously has favorable miscibility with water and other organic solvents, and is further able to dissolve component (A); therefore, it is preferable to contain an alkanediol in which both ends are not hydroxyl groups simultaneously in a part of component (C).

As the alkanediol in which both ends are not hydroxyl groups simultaneously, alkanediols represented by general formula (1) and general formula (2) below can be exemplified.
General formula (1) : R¹-CH(OH)-CH(OH)-CH₂-R²
General formula (2): R¹-CH(OH)-CH₂-CH(OH)-R²
(In the formulas, R¹ and R² represent a hydrogen atom or alkyl group. R¹ and R² may be the same, or may be different.)

More specifically, 1,2-propanediol, 1,2-butanediol, 1,2-pentanediol, 1,3-butanediol and 1,2-hexanediol can be exemplified.

Although it is sufficient for the amount of component (C) to be appropriately decided so as to be able to prevent clogging from occurring due to the acceptor solution drying at the nozzle and thickening or solidifying, it is preferably at least 5 parts by mass to no more than 80 parts by mass relative to 100 parts by mass of acceptor solution, and more preferably is at least 20 parts by mass to no more than 70 parts by mass. If the amount of component (C) is less than 5 parts by mass, it is not preferable because the wettability of the acceptor solution will be insufficient, and there will be a possibility of the acceptor solution drying and solidifying in the nozzle portion of the inkjet head or the inkjet recording device. If the amount of component (C) exceeds 80 parts by mass, since the amount of water that is component (D) will be too little, not just in the inkjet head and inkjet recording device, but there is a possible of component (A) and component (B) (especially component (B)) precipitating during storage of the acceptor solution, and thus is not preferable.

### ((D) Water)

The acceptor solution of the present invention contains (D) water. Water is used in order to dissolve component (A) and component (B) in the acceptor solution, along with raising the flowability of the acceptor solution. As the water, it is not general water that contains various ions, and it is preferable to use deionized water.

### ((E) Other Components)

The acceptor solution may further contain conventional, known additives, as necessary. As the additives, for example, viscosity modifiers, surfactants, pH adjusters, surface tension conditioners, antioxidants, antiseptics, antifungal agents, etc. can be exemplified. As the viscosity modifier, for example, polyvinyl alcohols, cellulose, water-soluble resins, etc. can be exemplified.

As the surfactant, although not particularly limited, anionic surfactants, non-ionic surfactants, fluorine-based surfactants, acetylene glycol-based surfactants, silicone-based surfactants, etc. are preferably used.

As the anionic surfactant, EMAL, LATEMUL, PELEX, NEOPELEX and DEMOL (all manufactured by Kao Corporation), SUNNOL, LIPOLAN, LIPON and LIPAL (all manufactured by Lion Corporation), etc. can be exemplified.

As the non-ionic surfactant, NIOGEN, EPAN and SORGEN (all manufactured by Dai-Ichi Kogyo Seiyaku Co., Ltd.), EMULGEN, AMIET and EMASOL (all manufactured by Kao Corporation), NAROACTY, EMULMIN and SANNONIC (all manufactured by Sanyo Chemical Industries, Ltd.), etc. can be exemplified.

As the fluorine-based surfactant, MEGAFAC F-114, F-410, F-440, F-447, F-553 and F-556 (manufactured by DIC Co., Ltd.), SURFLON S-211, S-221, S-231, S-233, S-241, S-242, S-243, S-420, S-661, S-651 and S-386 (manufactured by AGC Seimi Chemical Co., Ltd.), etc. can be exemplified.

As the acetylene glycol-based surfactant, for example, SURFYNOL 104, 82, 465, 485, TG, 2502, Dinol 604 and Dinol 607 (all acetylene glycol-based surfactants; manufactured by Air Products Japan, Inc.), OLFINE E1004, E1010, PD004 and EXP4300 (all acetylene glycol-based surfactants; manufactured by Nissin Chemical Industry Co., Ltd.), ACETYLENOL EH, E40, E60, E81, E100 and E200 (all acetylene glycol-based surfactants; manufactured by Kawaken Fine Chemicals, Co., Ltd.), etc. can be exemplified.

As silicone-based surfactants, for example, FZ-2122, FZ-2110, FZ-7006, FZ-2166, FZ-2164, FZ-7001, FZ-2120, SH 8400, FZ-7002, FZ-2104, 8029 ADDITIVE, 8032 ADDITIVE, 57 ADDITIVE, 67 ADDITIVE and 8616 ADDITIVE (all manufactured by Dow Corning Toray Co., Ltd.), KF-6012, KF-6015, KF-6004, KF-6013, KF-6011, KF-6043, KP-104, 110, 112, 323, 341 and 6004 (all manufactured by Shin-Etsu Chemical Co., Ltd.), BYK-300/302, BYK-306, BYK-307, BYK-320, BYK-325, BYK-330, BYK-331, BYK-333, BYK-337, BYK-341, BYK-344, BYK-345/346, BYK-347, BYK-348, BYK-375, BYK-377, BYK-378, BYK-UV3500, BYK-UV3510, BYK-310, BYK-315, BYK-370, BYK-UV3570, BYK-322, BYK-323, BYK-350, BYK-352, BYK-354, BYK-355, BYK-358N/361N, BYK-380N, BYK-381, BYK-392, BYK-340, BYK-Silclean3700 and BYK-Dynwet800 (all manufactured by BYK-Chemie GmbH), etc. can be exemplified.

These surfactants may be used independently, or two or more types may be jointly used. The content of surfactant is appropriately adjusted according to the ink miscibility or washability, wettability to the flow path inside walls, and inkjet spray property.

In addition, the acceptor solution may jointly use various organic solvents different from the above-mentioned (C) the high-boiling-point water-soluble organic solvent with a boiling point of at least 180ºC. As the water-soluble organic solvent, for example, alkyl alcohols having 1 to 5 carbon atoms such as methyl alcohol, ethyl alcohol, n-propyl alcohol, isopropyl alcohol, n-butyl alcohol, sec-butyl alcohol, tert-butyl alcohol, isobutyl alcohol and n-pentanol; monohydric alcohols such as 3-methoxy-3-methyl-1-butanol, 3-methoxy-1-propanol, 1-methoxy-2-propanol and 3-methoxy-n-butanol; amides such as 1-dimethylformamide, dimethylacetamide, 3-methoxypropanamide, 3-butoxypropanamide, N,N-dimethyl-3-methoxypropanamide, N,N-dibutyl-3-methoxypropanamide, N,N-dibutyl-3-butoxypropanamide and N,N-dimethyl-3-butoxypropanamide; ketones or keto-alcohols such as acetone and diacetone alcohol; ethers such as tetrahydrofuran and dioxane; diols such as isobutylene glycol; monoalkyl ethers such as ethylene glycol monomethyl (or ethyl, isopropyl, n-butyl, isobutyl, n-hexyl or 2-ethylhexyl) ether and propylene glycol monomethyl (or ethyl, isopropyl, n-butyl or isobutyl) ether; dialkyl ethers of polyalcohols such as diethylene glycol dimethyl ether, diethylene glycol ethylmethyl ether, propylene glycol dimethyl ether, propylene glycol diethyl ether and dipropylene glycol dimethyl ether; amines such as monoethanolamine and 2-amino-2-methyl-1-propanol; nitrogen-containing heterocyclic compounds; cyclic ester compounds; esters such as ethyl lactate and methyl lactate; etc. can be exemplified. These water-soluble organic solvents can be use independently or as a mixture.

### Surface Tension

The surface tension of the acceptor solution is preferably no more than 35 nM/m, more preferably no more than 32 nM/m, and even more preferably no more than 30 mN/m, from the viewpoint of wettability to the member surface and miscibility with ink. In the case of spraying the acceptor solution by the inkjet method, it is preferable to set the surface tension of the acceptor solution to at least 20 mN/m from the point of making the spray stability of the acceptor solution from the spray head favorable. The surface tension of the acceptor solution can be adjusted by appropriately selecting the above-mentioned organic solvents and the above-mentioned surfactants. It should be noted that the surface tension in the present invention is a value measured by the Wilhelmy method (Model: CBVP-Z manufactured by Kyowa Interface Science Co., Ltd.) at a measurement temperature of 25ºC.

### Ink set for water-based inkjet

The ink set for water-based inkjet of the present invention (hereinafter simply referred to as "ink set") contains the above-mentioned acceptor solution and water-based ink containing a coloring material.

The water-based ink may be any type so long as being a water-based ink used for inkjet, may be dye based, and may be pigment based; however, it is preferable to use a pigment-based ink having favorable resistances such as the water resistance and light resistance of the printed matter.

### (Water-based pigment ink)

### (Pigment)

The pigment of the water-based pigment ink of the present invention is not particularly limited, and organic pigments, inorganic pigments, etc. used in conventional inkjet inks can be exemplified. These may use one type independently, or may use by combining two or more types. As specific organic pigments, for example, an insoluble azo pigment, soluble azo pigment, derivatives from dyes, phthalocyanine-based organic pigments, quinacridone-based organic pigments, perylene-based organic pigments, dioxazine-based organic pigments, nickel azo-based pigments, isoindolinone-based organic pigments, pyranthrone-based organic pigments, thioindigo-based organic pigments, condensed azo-based organic pigments, benzimidazolone-based organic pigments, quinophthalone-based organic pigments, isoindoline-based organic pigments, quinacridone-based solid pigments, and perylene-based solid pigments; and as other pigments, carbon black, etc. can be exemplified.

When exemplifying organic pigments by the color index (C.I.) number,

C.I. pigment yellow 1, 2, 3, 12, 13, 14, 16, 17, 20, 24, 73, 74, 75, 83, 93, 95, 97, 98, 109, 110, 114, 117, 120, 125, 128, 129, 130, 137, 138, 139, 147, 148, 150, 151, 153, 154, 155, 166, 168, 180, 185, 213, 214;

C.I. pigment red 5, 7, 9, 12, 48, 49, 52, 53, 57, 97, 112, 122, 123, 149, 168, 177, 180, 184, 192, 202, 206, 209, 215, 216, 217, 220, 223, 224, 226, 227, 228, 238, 240, 254;

C.I. pigment orange 16, 36, 43, 51, 55, 59, 61, 64, 71;

C.I. pigment violet 19, 23, 29, 30, 37, 40, 50;

C.I. pigment blue 15, 15:1, 15:3, 15:4, 15:6, 16, 22, 60, 64;

C.I. pigment green 7, 36, 58;

C.I. pigment brown 23, 25, 26; etc. can be exemplified.

In addition, as specific examples of the inorganic pigment, titanium oxide, barium sulfate, calcium carbonate, zinc oxide, barium carbonate, silica, talc, clay, synthetic mica, alumina, zinc white, lead sulfate, yellow lead, zinc yellow, red iron oxide (red iron(III) oxide), cadmium red, ultramarine, Prussian blue, chromium oxide green, cobalt green, amber, titanium black, synthetic iron black, inorganic solid pigments, etc. can be exemplified.

In addition, the pigments of the present invention can employ self-dispersion pigments, from the point of the fixing property to the recording medium surface. Self-dispersion pigment refers to a pigment modified with a hydrophilic group directly at the pigment surface. As the hydrophilic group used in the self-dispersion pigment, it is preferably a carbonyl group, carboxyl group, hydroxyl group, sulfonyl group, sulfonate group, phosphorus-containing group, etc. from the points of the interaction with divalent metal salt of the acceptor solution being strong and excelling in pigment fixing property. Thereamong, a carboxyl group, sulfonate group and phosphorus-containing group are preferable, and it is more preferable to use a self-dispersion pigment having a phosphorus-containing group having at least one of a P-O or P=O bond.

The self-dispersion pigment is obtained by introducing the above-mentioned hydrophilic group to the above-mentioned organic pigment or the above-mentioned inorganic pigment by a conventional, known method.

The method of introducing a phosphorus-containing group having a P-O or P=O bond to the pigment, for example, can be established as a method described in the specifications of US Patent No. 5,554,739, No. 5,707,432, No. 5,837,045, etc.

The average dispersion particle size of the pigment is not particularly limited so long as a size enabling the desired coloring. Although differing depending on the type of pigment used, the number average particle size is preferably within the range of 5 to 200 nm, and more preferably 30 to 150 nm, from the points of the dispersibility and dispersion stability of the pigment being favorable and obtaining sufficient tinting strength. If the number average particle size is no more than the above-mentioned upper limit, it will be difficult for nozzle clogging of the inkjet head to occur, and thus homogenous images of high reproducibility can be obtained, and the obtained printed matter can be made high quality. In the case of the number average particle size being no more than the above-mentioned lower limit value, the light resistance may decline. It should be noted that the number average particle size of the pigment in the present invention is measured using a thick-type particle size analyzer (manufactured by Otsuka Electronics Co., Ltd., model: FPAR-1000) at a measurement temperature of 25ºC.

As commercially available self-dispersion pigments, "Cab-O-Jet400, Cab-O-Jet450C, Cab-O-Jet465M, Cab-O-Jet470Y, Cab-O-Jet480V, Cab-O-Jet740Y, Cab-O-Jet300, Cab-O-Jet200, Cab-O-Jet250, Cab-O-Jet260, Cab-O-Jet270" manufactured by Cabot; "Microjet black CW1, Microjet black CW2" manufactured by Orient Chemical Industries Co., Inc.; "Aqua-Black 162, Aqua-Black 001" manufactured by Tokai Carbon Co., Ltd.; etc. can be exemplified.

In the present invention, the content of pigment may be appropriately adjusted. Although differing depending on the type of pigment, the content of pigment in the overall inkjet ink is preferably 0.05 to 20% by mass, and more preferably 0.1 to 10% by mass, from the point of achieving both dispersibility and tinting strength.

In addition, in the present invention, it is also possible to use a pigment dispersion produced by dispersing pigment in an aqueous solvent by way of surfactant, dispersant, etc. It is not to be limited to the specific examples described above, and can be appropriately adjusted by a known method.

### (Pigment dispersant)

In the present invention, the pigment dispersant is not particularly limited. For example, it is possible to use surfactants of cationic type, anionic type, nonionic type, amphoteric, silicone type, fluorine type, etc. Among the surfactants, macromolecular surfactants (polymer dispersants) like those exemplified next are preferable.

As polymer dispersants, for example, dispersants having a polyester based, polyacryl based, polyurethane based, polyamine based or polycaprolactone based main chain, and having a polar group such as an amino group, carboxyl group, sulfo group or hydroxyl group at a side chain, etc. can be exemplified. As such polymer dispersants, for example, (co)polymers of unsaturated carboxylic esters such as polyacrylic ester; copolymers of aromatic vinyl compound such as styrene andα methylstyrene and an unsaturated carboxylic acid ester such as an acrylic ester; (partial) amine salts, (partial) ammonium salts and (partial) alkylamine salts of (co)polymers of unsaturated carboxylic acids such as polyacrylic acid; (co)polymers of hydroxyl group-containing unsaturated carboxylic esters such as hydroxyl group-containing polyacrylic ester, and modified products thereof; polyurethanes; unsaturated polyamides; polysiloxanes; longchain polyaminoamide phosphates; polyethyleneimine derivatives (amides obtained by reaction of poly(lower alkyleneimine) and a free carboxy group-containing polyester, and bases thereof; and polyallylamine derivatives (reaction products obtained by reaction of polyallylamine and one or more components selected from the group consisting of the following three compounds: a free carboxy group-containing polyester; a free carboxy group-containing polyamide; and a free carboxy group-containing co-condensate of ester and amide (polyester amide)), etc. can be exemplified. Thereamong, as the polymer dispersant, being a (co)polymer of unsaturated carboxylic acid ester is preferable from the point of suppressing feathering and bleeding. As specific examples, "SMA1440" manufactured by SARTOMER (styrene-maleic acid-maleic acid ester polymer dispersant, weight average molecular weight: 7,000, acid value: 185 mgKOH/g), "JONCRYL 682" manufactured by BASF Japan (styrene-acrylic acid polymer dispersant, weight average molecular weight: 1,700, acid value: 238 mgKOH/g), "RY72" manufactured by Gifu Shellac Manufacturing Co., Ltd. (styrene-acrylic acid-acrylic acid ester polymer dispersant, weight average molecular weight: 14,800, acid value: 170 mgKOH/g), etc. can be exemplified.

In the present invention, the above-mentioned pigment dispersants can be used independently as one type, or by combining two or more types. In the present invention, in the case of using a pigment dispersant, although differing depending on the type of pigment, the pigment dispersant is preferably 5 to 50% by mass relative to 100% by mass of pigment, and more preferably 5 to 30% by mass, from the point of dispersibility and dispersion stability. Furthermore, the number average particle size of the dispersed pigment is preferably within the range of 5 to 200 nm, and more preferably 30 to 150 nm.

### (Resin)

The resin that can be used in the inkjet ink promotes the fixing of the pigment to the surface of the recording medium by suppressing penetration of the pigment into the recording medium. As the resin, a resin emulsion is preferable from the point of excelling in fixing property and excelling in the water resistance of the printed matter.

In the present invention, resin emulsion indicates an aqueous dispersion in which the continuous phase is water, and the dispersion particles are resin particulates. The above-mentioned resin emulsion possesses a property of thickening and clumping when water which is generally the continuous phase decreases due to evaporation, permeation, etc., and thus has an effect of promoting fixing to copy paper by suppressing penetration of the pigment into the printing paper.

The resin emulsion, for example, can be produced by mixing water, monomer, emulsifier, and polymerization initiator to cause emulsion polymerization reaction, and neutralizing after reaction. As the emulsifier, a typical macromolecular surfactant may be used, or a reactive emulsifier having unsaturated bonds may be used. In addition, the resin emulsion can be obtained without causing an emulsion polymerization reaction, by rather mixing the resin particulates with the surfactant along with water. For example, it can be obtained by adding and mixing resin particulates consisting of (meth)acrylic acid ester or styrene and (meth)acrylic acid ester, and surfactant into water. In this case, the blending proportion of resin component to surfactant (weight ratio) preferably is on the order of 10:1 to 5:1 normally, and if the used amount of surfactant is less than this range, the emulsion will be harder to form; whereas, if greater than this range, there will be a risk of the water resistance of the ink declining, which is not preferable.

As specific examples of the resin component constituting the resin emulsion, for example, it is preferably (meth)acrylic resin, styrene resin, polyester resin, vinyl resin, polyethylene resin, urethane resin, silicone resin, acrylamide resin, epoxy resin, resins containing an acid group such as (meth)acrylic acid, or a mixed form of these. In particular, it is preferable to include (meth)acrylic resin in the resin particulates. For these resins, the mode of copolymerization is not particularly limited, and for example, can be established as a block copolymer, random copolymer, etc. The weight average molecular weight of the resin emulsion is preferably 1,000 to 1,000,000, and more preferably 10,000 to 1,000,000. As the content of resin emulsion in the inkjet ink, although not particularly limited, the content of solids in the resin emulsion can be set on the order of 0.05 to 20% by mass, for example, relative to the total amount of inkjet ink.

As these resin components, a polymer having both a hydrophilic portion and hydrophobic portion is preferable, and although the number average particle size thereof is not particularly limited so long as being able to form an emulsion, it is preferably no more than 500 nm, more preferably no more than 200 nm, and even more preferably no more than 100 nm. If the number average particle size of the resin component constituting the resin emulsion is greater than 500 nm, and the difference w the pigment particle size becomes great, upon being sprayed from inkjet ink to form an image on a substrate, the resin particles formed from the resin emulsion particles will come to contact so that pigment particles will be present in the voids thereof, forming a sea-island structure, and thus there will be a risk of the fixing property of the pigment being obstructed.

### (Aqueous solvent)

As aqueous solvents that can be used in the water-based pigment ink, water and water-soluble organic solvents can be exemplified. The water-soluble organic solvent can be established to be the same as the water-soluble organic solvent exemplified for the acceptor solution. The water and water-soluble organic solvent can be used either independently or as a mixture.

### (Surfactant)

As the surfactant that can be used in the water-based pigment ink, it can be established to be the same as the surfactants exemplified in the acceptor solution. The surfactants can be used either independently or as a mixture.

### (Other components)

Similarly to the acceptor solution, conventional, known additives may be further included in the water-based pigment ink, as necessary. As the additives, for example, viscosity modifiers, pH adjusters, surface tension conditioners, antioxidants, antiseptics, antifungal agents, etc. can be exemplified.

### (Preparation method of inkjet ink)

The preparation method of the inkjet ink is not particularly limited. For example, it is possible to exemplify a method of preparing by adding a self-dispersion pigment to an aqueous solvent, and after dispersing, adding the resin, surfactant and other component as necessary; a method of preparing by adding the pigment and dispersant to the aqueous solvent and dispersing, followed by adding the resin, surfactant and other components as necessary; a method of preparing by adding the pigment, resin, surfactant and other components as necessary to the aqueous solvent, and then dispersing the pigment; etc.

### Inkjet Recording Method

In the present invention, it is preferably to spray the inkjet acceptor solution of the above-mentioned ink set onto the surface of the recording medium by the inkjet system, followed by spraying the water-based ink of the above-mentioned ink set by the inkjet system.

### (Recording medium)

In the inkjet recording method of the present invention, the recording medium to be printed using the inkjet ink is not particularly limited, and any of absorbent or non-absorbent substrates such as coated paper, uncoated paper and fabric can be used. More specifically, as uncoated paper, woody paper, wood-containing paper and wood free paper; as the coated paper, coat paper, art paper, cast paper, lightweight coat paper and fine coat paper; as the absorbent of cloth or the like, raw cotton, artificial fiber textile, silk, hemp, fabric, nonwoven fabric, leather, etc. can be exemplified; as non-absorbent substrate, polyester resin, polypropylene synthetic paper sheet, vinyl chloride resin, polyimide resin, metal, metal foil coated paper, glass, synthetic rubber, natural rubber, etc. can be exemplified; however, it is not limited thereto.

### (Printer)

The acceptor solution and ink set of the present invention can be applied to any inkjet recording devices such as a piezo system, thermal system and static electricity dispersion system; however, thereamong, it is preferably used in a piezo-type inkjet recording device. The piezo-type recording head uses a piezoelectric vibrator as the pressure generating element, and causes ink droplets to spray by pressurizing and depressurizing inside a pressure chamber by way of deformation of the piezoelectric vibrator. With such a recording head, as a trial attempting a higher quality picture and an improvement in recording speed, a trial is made attempting a higher quality picture by increasing the type of recordable colors by increasing the number of nozzle arrays, and a trial is made attempting an improvement in recording speed by increasing the number of nozzle openings constituting one nozzle array. Furthermore, in order to increase the number of nozzles provided to one head, a trial refining the nozzle was also made.

However, when the nozzles of the head are refined, flight curvature and nozzle clogging will tend to be induced by clinging and remaining ink. In addition, when aggregates generate in the ink component in use for a long time period, they will become an obstacle to the flying of ink droplets, and trouble like flight curvature and nozzle clogging will occur. For this reason, the development of an inkjet ink for which stable spraying is possible without clogging occurring in the inkjet head has been becoming a matter of considerable urgency. Therefore, compared to a system that tends to generate aggregates by heating as in thermal jet, etc., the inkjet ink of the present invention that hardly generates aggregates from the driving system thereof, and that can further suppress the generation of aggregates thereof, is suited to a piezo-type inkjet recording device.

### (Fixing period and fixing amount of acceptor solution)

The fixing period of the acceptor solution to the recording medium is not particularly limited so long as the water-based ink and acceptor solution each are sprayed by the inkjet system to contact on the recording medium; however, it is preferable to fix immediately before spraying the water-based ink, in the point of more effectively suppressing feathering and bleeding. Although the fixing amount of the acceptor solution to the recording medium is not particularly limited, in order to effectively suppressing feathering and bleeding, the salts contained in the acceptor solution (component (A) and component (B)) are preferably an amount so as to be fixed at 0.01 to 2000 µmol per 1 cm² of recording medium. Even if the fixing amount of salts (component (A) and component (B)) per 1 cm² of recording medium exceeds 2000 µmol, a further image improving effect will hardly be obtained.

### EXAMPLES

Although the present invention will be explained more specifically by way of the Examples hereinafter, it is not to be limited to the following Examples. It should be noted that the units are parts by mass unless otherwise noted. Preparation of Acceptor Solution

Acceptor solutions of Examples 1 to 17 and Comparative Examples 1 to 4 were obtained with A) to E1) listed below as the mixing proportions in Table 1.
(A) organic salt having a carbon number of at least 3
   (A1) calcium pantothenate
   (A2) calcium propionate
   (A3) calcium lactate
   (A4) sodium pantothenate
(B) inorganic salt and/or organic salt having a carbon number of no more than 2
   (B1) calcium acetate
   (B2) calcium nitrate
   (B3) magnesium acetate
   (B4) magnesium sulfate
   (B5) calcium chloride
   (B6) magnesium chloride
   (B7) sodium chloride
   (B8) sodium acetate
(C) high-boiling-point water-soluble organic solvent with a boiling point of at least 180ºC
   (C1) 1,2-propanediol (propylene glycol, boiling point: 188.2ºC)
   (C2) 1,3-propanediol (trimethylene glycol, boiling point: 210 to 212ºC)
   (C3) 1,2-pentanediol (boiling point: 206ºC)
   (C4) triethylene glycol mono-n-butyl ether (boiling point: 271.2ºC)
   (C5) 2-pyrrolidone (boiling point: 250ºC)
(D) water: ion-exchange water

### (E1) surfactant

(E1-1) acetylenediol surfactant (tradename: Dynol (registered trademark) 607, manufactured by Air Products Japan, Inc.)
(E1-2) polyether-modified silicone surfactant (tradename: Silface (registered trademark) 503A, manufactured by Nissin Chemical Industry Co., Ltd.)

**[Table 3]**

| | Example | | | | | | | | | | | | | | | | | Comparative example | | | |
|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 7 | 1 | 2 | 3 | 4 |
| A1 | 7.4 | 4.76 | 4.76 | | | | | 7.14 | 1.43 | 1.43 | 1.45 | | | 4.76 | 4.75 | 4.76 | | 9.52 | | | |
| A2 | | | | 1.80 | 1.88 | | | | | | | 0.33 | | | | | | | | | |
| A3 | | | | | | 2.18 | 2.18 | | | | | | 12 | | | | | | | | |
| A4 | | | | | | | | | | | | | | | | | 3.82 | | | | |
| B1 | 0.74 | 1.56 | | | | | | 0.71 | 1.74 | | | | | 1.58 | 1.58 | | 1.59 | | 3.15 | | |
| B2 | | | 1.84 | | | | | | | 34 | | 33 | | | | | | | | | |
| B3 | | | | 1.42 | | | | | | | 0.7 | | | | | | | | | | |
| B4 | | | | | 1.20 | | | | | | | | 0.6 | | | | | | | 2.4 | |
| B5 | | | | | | 1.10 | | | | | | | | | | | | | | | |
| B3 | | | | | | | 0.85 | | | | | | | | | | | | | | |
| B7 | | | | | | | | | | | | | | | | | | | | | 175 |
| B3 | | | | | | | | | | | | | | | | 0.82 | | | | | |
| C1 | 20 | 30 | 30 | 40 | 40 | 30 | 25 | 30 | 25 | | 60 | 50 | 10 | | | 30 | 30 | 30 | 30 | 30 | 30 |
| C2 | | | | | | | | | 25 | | | | | | | | | | | | |
| C3 | | | | | | | | | 20 | 30 | | | 40 | | | | | | | | |
| C4 | | | | | | | | | | | | | | 20 | | | | | | | |
| C5 | | | | | | | | | | | | | | | 30 | | | | | | |
| EI-1 | 0.5 | 0.5 | | 0.5 | | 0.5 | | | 0.5 | | 0.5 | | | 0.5 | 0.5 | 0.5 | 0.5 | 0.2 | 0.5 | 25 | 0.5 |
| EI-2 | | | 0.5 | | 0.5 | | 0.5 | 0.5 | | 0.5 | | 0.5 | 0.5 | | | | | | | | |
| D | 71.62 | 63.6 | 63.10 | 55.22 | 50.44 | 62.22 | 61.37 | 41.62 | 23.22 | 24.29 | 27.30 | 45.21 | 43.40 | 63.10 | 63.01 | 63.02 | 64.30 | 69.28 | 65.34 | 64.10 | 64.12 |
| Total | 100 | 100 | 100 | 100 | 100 | 100 | 100 | 100 | 100 | 100 | 100 | 100 | 100 | 100 | 100 | 100 | 100 | 100 | 100 | 100 | 100 |

### Preparation of Ink

### (Preparation of pigment dispersion A-1 (black))

A [2-(4-aminophenyl)-1-hydroxyethane-1,1-diyl]bisphosphonic acid-sodium salt was produced using a similar procedure as the procedure shown in Kieczykowski et al.; J. Org. Chem., 1995, Vol. 60, pp. 8310-8312 and the specification of US Patent No. 4,922,007. First, a condenser equipped with a gas outlet at the top of the condenser, a thermometer, and a dry nitrogen inlet, as well as a 100 mL equalizing dropping funnel were attached to a 500 mL three-neck flask. To this flask, first 32 g of phosphonic acid (380 mmol) and 160 mL of methanesulfonic acid (solvent) were added. To this stirred mixture, 57.4 g of aminophenyl acetic acid (380 mmol) was added gradually. This stirred mixture was heated at 65ºC for 1 to 2 hours to completely dissolve the solid content. This entire system was flushed with dry nitrogen, and after all of the solid content dissolved, the temperature was reduced to 40ºC. To this heated solution, 70 mL of PCl₃ (800 mmol) was slowly added through a dropping funnel. The HCl gas produced from the reaction was exhausted through the gas outlet. After addition was completed, the reaction mixture was heated at 40ºC while stirring for 2 hours. Next, the temperature was raised to 65 to 70ºC, and this mixture was stirred overnight. The produced clear, light brown solution was cooled to room temperature, and then rapidly cooled by adding to 600 g of an ice-water mixture.

This aqueous mixture was placed into a 1-L beaker, and heated at 90 to 95ºC for 4 hours (top of beaker covered by glass plate). Next, this mixture was cooled to room temperature, and the pH of this mixture was adjusted to 4 to 5 with a 50% NaOH solution. This mixture was cooled in an ice bath at 5ºC for 2 hours, then the produced solid content was collected by suction filtration, washed with 1 L of cold deionized water, and dried overnight at 60ºC to obtain a white or off-white solid product (Yield was 48 g, and yield rate was 39%.). The ¹H-NMR data (D₂O/NaOH) of the obtained solid product is as follows: 7.3(2H,d), 6.7(2H,d), 3.2(2H,t). The ¹³C-NMR data (D₂O/NaOH) of the obtained solid product was 141, 130, 128, 112, and 73, respectively.

An amount of 20 g of carbon black (Black Pearls (registered trademark) 700 carbon black (manufactured by Cabot)), 20 mmol of the above-mentioned solid product, 20 mmol of nitric acid and 200 mL of deionized water were mixed with a Silverson mixer (6000 rpm) at room temperature. After 30 minutes, sodium nitrite (20 mmol) dissolved in a small amount of water was slowly added to this mixture. The temperature reached 60ºC by mixing, and this was allowed to progress for 1 hour. A self-dispersion pigment (including pigments in which at least two phosphonate groups or salts thereof are bound) in which carbon black is modified with the above-mentioned solid product was generated. The pH was adjusted to 8 to 9 with a NaOH solution, and after 30 minutes, the dispersion produced by the self-dispersion pigment was diafiltrated by a spectrum membrane using 20 parts by volume of deionized water, and concentrated to 15% by mass solid content to obtain the pigment dispersion A-1 (black).

### (Preparation of pigment dispersion A-2 (blue), pigment dispersion A-3 (yellow) and pigment dispersion A-4 (red))

The pigment dispersion A-2 (blue), pigment dispersion A-3 (yellow) and pigment dispersion A-4 (red) were obtained similarly to the preparation of the pigment dispersion A-1 (black), except for using C.I. pigment blue 15:4 (PB15:4), C.I. pigment yellow 74 (PY74) and C.I. pigment red 122 (PR122), respectively, in place of carbon black in the preparation of the pigment dispersion A-1 (black).

The ink A-1 (black) was prepared by mixing 30 parts by mass of the pigment dispersion A-1, 5 parts by mass of glycerin, 25 parts by mass of propylene glycol, 5 parts by mass of an acrylic resin emulsion having a Tg of 40ºC and acid value of 25 mgKOH/g as the resin solid content, 0.5 parts by mass of acetylenediol surfactant (tradename: Dynol (registered trademark) 607, manufactured by Air Products Japan, Inc.) and 34.5 parts by mass of ion-exchange water to make a total of 100 parts by mass. The ink A-2 (blue), ink A-3 (yellow) and ink A-4 (red) were prepared in a similar way.

### Evaluation of Acceptor Solution 1. - Leaving Open -

The acceptor solutions according to the Examples and Comparative Examples were left open in an evaporating dish under conditions of 50ºC and 50% RH for 24 hours, and then visually observed as to whether the metal salt precipitated, and evaluated by the criteria of O: precipitate not formed, X: precipitate formed. O is a practical use range. The results are shown in Table 4.

### Evaluation of Acceptor Solution 2. - Storage Stability -

As an accelerated test of storage stability, the acceptor solutions according to the Examples and Comparative Examples were sealed in glass containers, and after keeping for one month at 60ºC, were visually observed as to whether metal salt precipitated, and evaluated by the criteria of O: precipitate not formed, X: precipitate formed. O is a practical use range. The results are shown in Table 4.

### Evaluation of Acceptor Solution 3. - Nozzle Clogging -

The acceptor solutions according to the Examples and Comparative Examples were filled into the ink head of an inkjet recording device PX-101 (manufactured by Seiko-Epson), the acceptor solution was sprayed at a spray velocity of 10 m/sec from all of the nozzles, and left for 1 hour. Subsequently, the acceptor solution was sprayed again from all of the nozzles at the same spray velocity. Subsequently, the presence of non-spraying nozzles was visually observed, and evaluated by the criteria of O: no non-spraying nozzles; Δ: non-spraying nozzle, but sprays from all nozzles immediately by cleaning; X: non-spraying nozzle, and difficult to restore by cleaning. O and Δ are practical use ranges. The results are shown in Table 4.

### Evaluation of Acceptor Solution 4. - Image Quality Improvement

The acceptor solutions according to the Examples and Comparative Examples were filled into the ink head of an inkjet recording device PX-101 (manufactured by Seiko Epson Corp.), and after printing the same image as the image performing printing with ink on OK Topcoat (coat paper manufactured by Oji Paper Co., Ltd.), the four colors of ink of the ink A-1 (black), ink A-2 (blue), ink A-3 (yellow) and ink A-4 (red) were filled into the ink head of one other inkjet recording device PX-101 (manufactured by Seiko Epson Corp.), and color printing was performed. The printed image was visually observed, and evaluated by the criteria of O: almost no bleeding or feathering seen; Δ: slight bleeding or feathering seen; and X: marked bleeding or feathering. O and Δ are practical use ranges. The results are shown in Table 4.

**[Table 4]**

| | Example | | | | | | | | | | | | | | | | | Comparative example | | | |
|---|---|---|---|---|---|---|---|---|---|---|---|---|---|---|---|---|---|---|---|---|---|
| | 1 | 2 | 3 | 4 | 3 | 6 | 7 | 8 | 9 | 10 | 11 | 12 | 13 | 14 | 15 | 16 | 17 | 1 | 2 | 3 | 4 |
| Example 1 | ○ | ○ | ○ | ○ | ○ | ○ | ○ | ○ | ○ | ○ | ○ | ○ | ○ | ○ | ○ | ○ | ○ | ○ | × | × | ○ |
| Example 2 | ○ | ○ | ○ | ○ | ○ | ○ | ○ | ○ | ○ | ○ | ○ | ○ | ○ | ○ | ○ | ○ | ○ | × | ○ | ○ | ○ |
| Example 3 | ○ | ○ | ○ | ○ | ○ | ○ | ○ | ○ | ○ | ○ | ○ | ○ | ○ | Δ | Δ | ○ | ○ | × | × | × | ○ |
| Example 4 | ○ | ○ | ○ | ○ | ○ | ○ | ○ | ○ | ○ | ○ | ○ | ○ | ○ | ○ | ○ | × | × | ○ | ○ | ○ | × |

The acceptor solution of the present invention was confirmed to be suited to the characteristics demanded in water-based inkjet recording systems, especially in the aspects of excelling in nozzle clogging prevention and storage stability, due to containing (A) an organic salt having a carbon number of at least 3, (B) an inorganic salt and/or organic salt with a carbon number of no more than 2, (C) a high-boiling-point water-soluble organic solvent with a boiling point of at least 180ºC, and (D) water (Examples 1 to 17).

On the other hand, in the case of containing only component (A) and not containing component (B), when sealing, raising the temperature and storing the acceptor solution, it was confirmed not to be preferable in the aspect of the salt contained in the acceptor solution possibly precipitating (Comparative Example 1). In addition, it was also confirmed that nozzle clogging occurred in the inkjet head (same)

In addition, in the case of containing only component (B) and not containing component (A), when leaving open the acceptor solution and part of the water contained in the acceptor solution evaporated, it was confirmed that salt contained in the acceptor solution precipitated (Comparative Examples 2 and 2). In addition, when part of the water contained in the acceptor solution evaporated, it was also confirmed that the metal salt that had been contained in the acceptor solution precipitated, and nozzle clogging in the inkjet head or blockage of the flow path of the acceptor solution in the inkjet recording device occurred (same).

In addition, in the case of the salt only consisting of monovalent metal ions, it was also confirmed that the image improving effect was not seen (Comparative Example 4).

## Claims

1. An aqueous inkjet acceptor solution comprising: (A) an organic salt having a carbon number of at least 3; (B) an inorganic salt and/or organic salt having a carbon number of no more than 2; (C) a high-boiling-point water-soluble organic solvent with a boiling point of at least 180ºC; and (D) water,
wherein at least one of the component (A) and the component (B) is a polyvalent metal salt.

2. The aqueous inkjet acceptor solution according to claim 1, wherein the polyvalent metal salt is selected from a calcium salt, a magnesium salt, a nickel salt, an aluminum salt, a boron salt, a zinc salt or a mixture thereof.

3. The aqueous inkjet acceptor solution according to claim 1 or 2, wherein the component (A) is a carboxylate.

4. The aqueous inkjet acceptor solution according to claim 3, wherein the component (A) is selected from a pantothenate, a propionate, a lactate or a mixture thereof.

5. The aqueous inkjet acceptor solution according to any one of claims 1 to 4, wherein the component (B) is selected from a chloride, a sulfate, a nitrate, a formate, an acetate or a mixture thereof.

6. The aqueous inkjet acceptor solution according to any one of claims 1 to 5, wherein the component (C) is a polyalcohol.

7. The aqueous inkjet acceptor solution according to claim 6, wherein the polyalcohol is an alkanediol in which both ends are not hydroxyl groups simultaneously.

8. An aqueous inkjet ink set comprising:
the aqueous inkjet acceptor solution according to any one of claims 1 to 7; and
a water-based ink containing coloring material.

9. A method of recording by an inkjet system on a recording medium using the aqueous inkjet ink set according to claim 8, comprising:
spraying the inkjet acceptor solution by the inkjet system onto a surface of the recording medium; and
subsequently spraying the water-based ink by the inkjet system.
